# EUROPÄISCHE PATENTSCHRIFT

(11) **EP 2 272 717 B1**
(45) Veröffentlichungstag und Bekanntmachung des Hinweises auf die Patenterteilung: **27.03.2013**
(21) Anmeldenummer: 10006176.1
(22) Anmeldetag: 15.06.2010
(51) Int. Cl.: B60R 9/06, B60R 9/10

(54) **Vorrichtung zur Befestigung von Gegenständen an dem rückwärtigen Stoßfänger eines Fahrzeuges**
Device for fastening objects to the rear fender of a vehicle
Dispositif de fixation d'objets sur le pare-chocs arrière d'un véhicule

(30) Priorität: 11.07.2009 DE 102009032740
(43) Veröffentlichungstag der Anmeldung: 12.01.2011
(73) Patentinhaber: GEDIA Gebrüder Dingerkus GmbH, 57439 Attendorn (DE)
(72) Erfinder: Buhr, Wolfgang, 57076 Siegen (DE); Vogt, Karl-Ulrich, 57462 Olpe (DE); Strautz, Josef, 57439 Attendorn (DE); Rockenberg, Manuela, 51702 Bergneustadt (DE); Börner, Heiko, 58840 Plettenberg (DE); Köster, Manuel, 51647 Gummersbach (DE)
(74) Vertreter: Köchling, Conrad-Joachim

(56) Entgegenhaltungen:
- EP-A2- 1 464 546
- DE-A1-102004 033 809
- FR-A1- 2 894 554
- GB-A- 2 338 261
- US-A- 6 045 022

## Beschreibung

Die Erfindung betrifft ein Fahrzeug mit mindestens einem Längsträger und einem rückwärtigen Stoßfänger und mit einer Vorrichtung zur Befestigung eines Trägersystems am rückwärtigen Stoßfänger, das aus einem zwischen einem Längsträger und dem Stoßfänger angeordneten Bauteil besteht, welches eine am Längsträger befestigte, befestigbare oder am Längsträger ausgebildete erste Platte und eine am Stoßfänger befestigte oder befestigbare oder am Stoßfänger ausgebildete zweite Platte aufweist, wobei die erste Platte und die zweite Platte jeweils einen angeformten Durchzug oder eine Lochung mit Aufstellungen, die eine durchzugartige Halteeinrichtung bilden, aufweist, wobei die Durchzüge oder die Lochungen mit den Aufstellungen der ersten Platte und der zweiten Platte zueinander koaxial ausgerichtet sind, und das Trägersystem einen Haltebolzen aufweist, der entweder den Durchzug oder die Lochung mit Aufstellungen der zweiten Platte durchgreift und in den Durchzug oder die Lochung mit Aufstellungen der ersten Platte eingreift, wobei der Haltebolzen in dem Durchzug oder der Lochung mit Aufstellungen der zweiten Platte geführt ist und mit einem am Haltebolzen ausgebildeten Gewinde mit dem an der ersten Platte befindlichen Gewindeteil verschraubt ist, oder der Haltebolzen den Durchzug oder die Lochung mit Aufstellungen der ersten Platte durchgreift und in den Durchzug oder die Lochung mit Aufstellungen der zweiten Platte eingreift, wobei der Haltebolzen in dem Durchzug oder der Lochung mit Aufstellungen der ersten Platte geführt ist und mit einem am Haltebolzen ausgebildeten Gewinde mit dem an der zweiten Platte befindlichen Gewindeteil verschraubt ist.

Die jeweilige Platte kann vorzugsweise ein selbständiges Teil sein, welches an dem Längsträger oder Stoßfänger in geeigneter Weise befestigt ist. Die Platte kann aber auch integraler Bestandteil des Stoßfängers beziehungsweise des Längsträgers oder einer Träger- oder Karosseriestruktur sein.

Es ist im Stand der Technik bekannt, ein Trägersystem beispielsweise zum Transport von Fahrrädern oder anderen Gegenständen an den Längsträgern eines Fahrzeugs zu befestigen. Hierzu werden bei den im Stand der Technik bekannten Lösungen Teile des Trägersystems mit den Längsträgern des Fahrzeugs verschraubt.

Bei den im Stand der Technik bekannten Lösungen ist es nachteilig, dass zur Abtragung der auftretenden Momente aufwändige Schweiß- und Halterkonstruktionen zur Befestigung von Teilen des Trägersystems an den Längsträgern erforderlich sind, die bei der Herstellung und Montage hohe Kosten verursachen.

Des Weiteren sind derartige Systeme nur unter großem Aufwand verbunden mit hohen Kosten an einem Fahrzeug nachrüstbar.

Aus der FR 2 894 554 A1 ist ein Fahrzeug mit einem Trägersystem nach dem Oberbegriff des Anspruchs 1 bekannt. Hierbei sind an Durchzügen Innengewinde ausgebildet, in die entsprechende Haltebolzen mit Gewinde eingreifen können. Dies bedeutet aber, dass bei einer derartigen Ausgestaltung das Fahrzeug von vornherein mit entsprechenden Durchzügen mit Gewinde versehen sein muss. Hierdurch entstehen aber bei der Erstausrüstung höhere Kosten infolge der Gewindeausgestaltung, was für den Automobilhersteller nachteilig ist und zu vermeiden ist. Bei der bekannten Ausgestaltung ist also immer die Gewindeausbildung erforderlich, die die Kosten der Gesamtvorrichtung erhöht.

Aus der EP 1 464 546 A2 ist ein Stoßfängersystem bekannt, bei dem mit Gewinde versehene Abschleppbuchsen in entsprechende Trägersysteme integriert sind. Dabei sind die Abschleppbuchsen zwar durch eine Öffnung einer Schließplatte gesteckt, aber hinterseitig der Schließplatte mit einer zusätzlichen Halterung rückseitig der Schließplatte befestigt. Eine solche Anordnung kann nur dann erfolgen, wenn das komplette Tragsystem vom Fahrzeug abgebaut, zerlegt und ergänzt wird. Eine einfache nachträgliche Anordnung einer solchen Gewindebuchse ist nicht ohne weiteres möglich.

Aufgrund des eingangs genannten Standes der Technik liegt der vorliegenden Erfindung die Aufgabe zugrunde, ein Fahrzeug der eingangs genannten Art zu schaffen, bei dem auf kostengünstige und einfache Art und Weise auch nachträglich eine Befestigung eines Trägersystems an dem rückwärtigen Stoßfänger ermöglicht ist.

Zur Lösung dieser Aufgabe schlägt die Erfindung vor, dass ein Gewindeteil vorgesehen ist, das alternativ in den Durchzug oder die Lochung mit Aufstellungen der ersten Platte oder in den Durchzug oder die Lochung mit Aufstellungen der zweiten Platte einsteckbar ist und an der ersten Platte oder deren Durchzug oder deren Lochung befestigbar ist oder an der zweiten Platte oder deren Durchzug oder deren Lochung befestigbar ist, und dass das Gewindeteil durch ein Teil mit einem zylindrischen Bereich mit einem Kragen am ersten Ende und einer außenseitigen Stufe nahe des anderen Endes gebildet ist, wobei der Außendurchmesser des zylindrischen Bereichs dem Innendurchmesser des Durchzuges oder des Durchzuges und die Länge des zylindrischen Bereichs zwischen Kragen und Stufe der Länge des Durchzuges oder des Durchzuges entspricht, so dass in der Montagesolllage der zylindrische Bereich innerhalb des Durchzuges oder des Durchzuges angeordnet ist und sich der Kragen am ersten Ende und die Stufe am anderen Ende des Durchzuges oder des Durchzuges abstützt.

Die Anordnung derartiger Durchzüge kann bereits in der Grundausstattung bei der Herstellung eines Fahrzeuges erfolgen. Dabei können die Durchzüge bereits beim Fertigungsprozess der Platten vorgesehen sein, so dass die Herstellung der Platten mit entsprechendem Durchzug nur äußerst geringfügige Mehrkosten gegenüber Platten ohne Durchzug verursachen.

Somit ist es aber nachträglich jederzeit ermöglicht, in einen der Durchzüge ein Gewindeteil einzustecken und darin zu befestigen, welches mit dem Haltebolzen eines Trägersystems verschraubbar ist, so dass auf kostengünstige und einfache Art und Weise ein Trägersystem beispielsweise zum Transport von Fahrrädern oder anderen Gegenständen an dem rückwärtigen Stoßfänger eines Fahrzeuges befestigbar ist.

Hierzu muss in einem ersten Arbeitsgang das Gewindeteil in den entsprechenden Durchzug eingebracht und darin befestigt werden, so dass anschließend der Haltebolzen mit dem Gewindeteil verschraubt werden kann. Der Haltebolzen des Trägersystems ist dabei an der ersten oder der zweiten Platte verschraubt, und an der jeweils anderen Platte längs geführt.

Hierdurch ist das Abtragen von auftretenden Momenten insbesondere durch den zwischen den Platten gebildeten Abstand ohne aufwändige Schweiß- und Halterkonstruktionen ermöglicht.

Dadurch, dass die Durchzüge bereits in der Grundausstattung eines Fahrzeugs in oder an den Platten angeordnet sind, ist somit das Nachrüsten des Trägersystems für alle Fahrzeuge mit derartigen Platten auf kostengünstige und einfache Art und Weise ermöglicht.

Falls an dem betreffenden Fahrzeug bereits an einem Längsträger ein Gewinde zur Aufnahme der Abschleppöse angeordnet ist, so müssen lediglich die Platten an dem anderen Längsträger mit einem Durchzug versehen werden. Hierdurch würden die Kosten zur Nachrüstung eines Trägersystems weiter gesenkt, da ein Haltebolzen des Trägersystems in das bereits vorhandene Gewinde zur Aufnahme der Abschleppöse und ein weiterer Haltebolzen des Trägersystems in das Gewindeteil einer erfindungsgemäßen Vorrichtung eingeschraubt werden könnte.

Anstelle der Durchzüge, die aufgrund ihrer Formstabilität bevorzugt sind, können auch Lochungen in den Platten vorgesehen sein, die mit Aufstellungen oder dergleichen Materialanformungen versehen sind, beispielsweise in Form angeschnittener und abgekanteter Blechlappen, wobei auch in solchen Lochungen und/oder an den Aufstellungen ein Gewindeteil fixiert werden kann. Die Art der Befestigung ist zunächst beliebig, solange sichergestellt ist, dass das Gewindeteil in Montagesolllage nicht mehr beweglich ist.

Ein derartiges Gewindeteil ist durch Längsverschieben in Durchzugsrichtung auf einfache Art und Weise in einen Durchzug einsteckbar. Sobald das Gewindeteil mit seinem im Durchmesser verjüngten freien Ende gegen die die Mündung begrenzende Seitenrandkante des Durchzuges des jeweiligen Durchzug gepresst wird, federt die Stufe und der zylindrische Bereich des Gewindeteils nach innen ein, so dass das Gewindeteil in den Durchzug einführbar ist. Sobald die Stufe den Durchzug durchragt, federt das Teil wieder in die ursprüngliche Lage zurück, so dass das Gewindeteil zwischen dem Kragen, der an der Platte anliegt einerseits und der Stufe, die an dem randseitigen Ende des Durchzuges anliegt andererseits gegen eine Längsverschiebung fixiert ist.

Insbesondere kann besonders bevorzugt vorgesehen sein, dass das Bauteil durch eine Crashbox mit einem rohrartigen Mittelteil und mit einer Kopf- und einer Fußplatte gebildet ist, wobei die erste Platte die Fußplatte bildet und am Träger angeordnet ist und die zweite Platte die Kopfplatte bildet und am Stoßfänger des Fahrzeugs angeordnet ist, wobei ferner an der Fußplatte der erste Durchzug oder die erste Lochung und an der Kopfplatte der zweite Durchzug oder die zweite Lochung ausgebildet ist.

Zur Erfüllung heutiger Sicherheitsvorschriften im Fahrzeugbau werden zwischen Stoßfänger und Längsträger des Fahrzeugs üblicherweise Crashboxen zur Aufnahme von beispielsweise bei einem Unfall entstehender Aufprallenergie verwendet.

Diese werden üblicherweise am Fahrzeug zwischen Längsträger des Fahrzeugs und Stoßfänger angeordnet. Somit ist es möglich, die Kopf- und die Fußplatte einer derartigen Crashbox mit den Durchzügen oder Lochungen auszurüsten, wobei hiermit auf das Verbauen weiterer Teile verzichtet werden kann.

Besonders bevorzugt ist vorgesehen, dass das Gewindeteil an der Platte formschlüssig befestigbar oder verrastbar ist und in Solllage unverdrehbar und unverschieblich fixiert ist.

Weiter kann besonders bevorzugt vorgesehen sein, dass der Durchzug der ersten Platte von der ersten Platte auf der dem rohrartigen Mittelteil abgewandten Seite abragt.

Alternativ kann besonders bevorzugt vorgesehen sein, dass die Durchzüge beider Platten aufeinander zugerichtet in das rohrartige Mittelteil hineinragend ausgebildet sind.

Je nach Länge des Bauteils können die Durchzüge in das Bauteil hineinragend oder aus dem Bauteil herausragend an den Platten angeordnet sein.

Durch eine aus dem Bauteil herausragende Anordnung wird der Abstand zwischen den beiden Lagerstellen vergrößert, wodurch erhöhte Momente abtragen werden können.

Zudem kann besonders bevorzugt vorgesehen sein, dass das Gewindeteil durch eine Buchse mit Innengewinde gebildet ist, in die der Haltebolzen des Trägersystems einschraubbar ist.

Eine Gewindebuchse stellt ein besonders kostengünstig und einfach herzustellendes Mittel zur Nachrüstung des Gewindeteils dar.

Darüber hinaus kann besonders bevorzugt vorgesehen sein, dass das Gewindeteil durch ein Teil mit einem zylindrischen Bereich mit einem Kragen am ersten Ende und einer außenseitigen Stufe nahe des anderen Endes gebildet ist, wobei der Außendurchmesser des zylindrischen Bereichs dem Innendurchmesser des Durchzuges und die Länge des zylindrischen Bereichs zwischen Kragen und Stufe der Länge des Durchzuges entspricht, so dass in der Montagesolllage der zylindrische Bereich innerhalb des Durchzuges angeordnet ist und sich der Kragen am ersten Ende und die Stufe am anderen Ende des Durchzuges abstützt.

Dabei kann besonders bevorzugt vorgesehen sein, dass der zylindrische Bereich und die Stufe bis zum der Stufe nahen freien Ende des Gewindeteils längs geschlitzt sind. Hierdurch ist es möglich den zylindrischen Bereich bei der Montage elastisch zusammenzudrücken, um das Durchstecken durch den Durchzug zu ermöglichen. In der Montagesolllage federt der elastische Bereich zurück.

Auch kann dabei besonders bevorzugt vorgesehen sein, das dass der Stufe nahe freie Ende eine Einführschräge bildend im Durchmesser verjüngt ist.

Darüber hinaus kann dabei besonders bevorzugt vorgesehen sein, dass der an den zylindrischen Bereich angrenzende Kragen in Einführrichtung einen Wegbegrenzungsanschlag bildet.

Insbesondere kann dabei besonders bevorzugt vorgesehen sein, dass der an den zylindrischen Bereich angrenzende Kragen Abflachungen aufweist, die sich in der Montagesolllage an an der Platte angeordneten Vorsprüngen abstützen, sodass das Gewindeteil unverdrehbar an der Platte den Durchzug durchragend angeordnet ist.

Um ein Verdrehen des eingesteckten Gewindeteils zu verhindern sind an der Platte Vorsprünge angeordnet, die sich an am Kragen ausgebildete Abflachungen abstützen. Hierdurch ist ein Verdrehen des Gewindeteils gegenüber der Platte verhindert. Somit ist das Gewindeteil weder drehbar noch längs verschieblich die Platte und den Durchzug durchragend fixiert.

Weiterhin kann besonders bevorzugt vorgesehen sein, dass das zylindrische Teil mit Kragen durch den zweiten Durchzug hindurch in den ersten Durchzug hinein eingesteckt oder einsteckbar ist, wobei der Innendurchmesser des zweiten Durchzugs größer ist als der Außendurchmesser des zylindrischen Teils samt Kragen, dass am oder nahe des freien Endes des Haltebolzens (in Einsteckrichtung) ein Gewinde zur Verschraubung mit dem zylindrischen Teil vorgesehen ist, wobei an dem Bolzen mit Abstand zum freien Ende eine Führung mit einem zweiten Kragen vorgesehen ist, mittels derer der Bolzen in der Montagesolllage innerhalb des zweiten Durchzuges geführt ist.

Bei einer derartigen erfindungsgemäßen Lösung wird zuerst das Gewindeteil durch die zweite Platte mit dem zweiten Durchzug hindurch in die erste Platte beziehungsweise in den ersten Durchzug hinein eingesteckt und arretiert. Anschließend kann der Haltebolzen eines Trägersystems durch den zweiten Durchzug hindurchgesteckt werden und mit einem am oder nahe des freien Endes des Bolzens ausgebildeten Gewinde mit dem Gewindeteil verschraubt werden. Dabei ist an dem Haltebolzen ein Führungsbereich, beispielsweise ein Bereich mit einem erweiterten Durchmesser oder einer aufgesteckten Führungshülse vorgesehen, der in der Montagesolllage innerhalb des zweiten Durchzuges längs geführt ist. Somit ist auf kostengünstige und einfache Art und Weise der Haltebolzen eines entsprechenden Trägersystems an einer derartigen Vorrichtung befestigbar.

Durch das auch nachträglich ermöglichte Einstecken eines Gewindeteils in einen bereits mit einem entsprechenden Durchzug ausgerüsteten PKW kann somit auf schnelle und einfache und kostengünstige Art und Weise ein Trägersystem an einem Fahrzeug befestigt werden.

Um ein zu weites Einschrauben des Haltebolzens zu verhindern, kann besonders bevorzugt vorgesehen sein, dass der zweite Kragen einen Wegbegrenzungsanschlag in Einführrichtung bildet.

Ein derartiger Wegbegrenzungsanschlag verhindert ein ungewolltes Überdrehen beziehungsweise zu weites Hineindrehen des Haltebolzens in das Gewindeteil beziehungsweise in die Vorrichtung.

In einer alternativen Ausführungsform der Erfindung kann besonders bevorzugt vorgesehen sein, dass das Gewindeteil in den zweiten Durchzug eingesteckt oder einsteckbar und darin befestigbar ist, wobei zur Verschraubung mit dem Gewindeteil am Haltebolzen ein vom freien Ende des Bolzens beabstandetes Gewinde ausgebildet ist, und der Bolzen an oder nahe dem freien Ende des Bolzens in der Montagesolllage innerhalb des zweiten Durchzuges geführt ist.

Hierbei ist das Gewindeteil mit Kragen in den zweiten Durchzug eingesteckt und der Haltebolzen des Trägersystems innerhalb des ersten Durchzuges längs geführt und mit dem Gewindeteil im zweiten Durchzug verschraubt. Bei einer derartigen Lösung muss das Gewindeteil nicht durch den Hohlkörper hindurchgeführt und in einem nicht einsehbaren Bereich befestigt werden, sondern kann außen an der zweiten Platte im zweiten Durchzug befestigt werden.

Schließlich kann besonders bevorzugt vorgesehen sein, dass das freie Ende des Bolzens spitz ausläuft.

Hierdurch ist das Einführen des Haltebolzens in das Gewindeteil erleichtert.

Ein Ausführungsbeispiel der Erfindung ist in den Zeichnungen dargestellt und im Folgenden näher beschrieben.

Es zeigt:
- Figur 1: ein erstes Ausführungsbeispiel der Erfindung in Explosionsdarstellung;
- Figur 2: desgleichen in Zusammenbaulage;
- Figur 3: ein erfindungsgemäßes Gewindeteil in Seitenansicht.

In den Figuren ist eine Vorrichtung zur Befestigung von Gegenständen an dem rückwärtigen Stoßfänger eines Fahrzeugs gezeigt. Derartige Gegenstände bestehen häufig aus einem Trägersystem, welches beispielsweise zum Transport von Fahrrädern oder ähnlichen Gegenständen dient. Die Vorrichtung besteht aus einem zwischen einem Längsträger und dem rückwärtigen Stoßfänger des Fahrzeuges angeordneten Bauteil mit rohrartigem Mittelteil 1 und einer am Längsträger befestigbaren ersten Platte 2 und einer am Stoßfänger befestigbaren zweiten Platte 3.

Erfindungsgemäß weisen die erste Platte 2 und die zweite Platte 3 jeweils einen angeformten Durchzug 4,5 auf. Die Durchzüge 4,5 sind koaxial zueinander angeordnet. Weiter ist ein Gewindeteil 6 vorgesehen, das alternativ in einen der Durchzüge 4, 5 einsteckbar und an der Platte 2 oder 3 oder dem Durchzug 4 beziehungsweise 5 verrastbar ist. Das Trägersystem weist zur Befestigung an der Vorrichtung einen Haltebolzen 7 auf, der den Durchzug 5 durchgreift und in den Durchzug 4 eingreift. Dabei ist der Haltebolzen 7 in einem Durchzug 4 oder 5 einer Platte 2 oder 3 geführt und in dem Durchzug 4 beziehungsweise 5 der anderen Platte 2 beziehungsweise 3 mit einem am Haltebolzen 7 ausgebildeten Gewinde 8 mit dem Gewindeteil 6 verschraubt.

Durch eine derartige Vorrichtung ist es ermöglicht, auf kostengünstige und einfache Art und Weise ein Verbindungsteil in einem der Durchzüge 4,5 zu befestigen, um daran ein Trägersystem auf einfache Art und Weise zu befestigen. Ein derartiges Gewindeteil 6 kann auch schnell und einfach nachgerüstet werden, so dass in der Grundausstattung eines Fahrzeugs lediglich die Durchzüge 4,5 vorhanden sein müssen. Die Anordnung derartiger Durchzüge 4,5 erfordert lediglich einen äußerst geringen oder keinen zusätzlichen Kostenaufwand.

Für den Fall, dass in einem Fahrzeug bereits die Abschleppöse in einen Längsträger einschraubbar ist, kann diese Befestigungsmöglichkeit zur Befestigung des einen Haltebolzens 7 eines Trägersystems dienen, und es muss lediglich in den zweiten Träger ein Gewindeteil 6 am Durchzug 4,5 befestigt werden, so dass ein Trägersystem befestigbar ist.

Im Ausführungsbeispiel ist das Bauteil durch eine Crashbox 9 mit einer Kopfplatte und einer Fußplatte gebildet. Die erste Platte 2 bildet dabei die Fußplatte und ist am Träger angeordnet und die zweite Platte 3 bildet die Kopfplatte, die am Stoßfänger des Fahrzeugs angeordnet ist. Dabei ist an der Fußplatte der erste Durchzug 4 und an der Kopfplatte der zweite Durchzug 5 ausgebildet. Derartige Crashboxen 9 finden heutzutage an Personenkraftwagen Verwendung, um bestehende Sicherheitsvorschriften zu erfüllen.

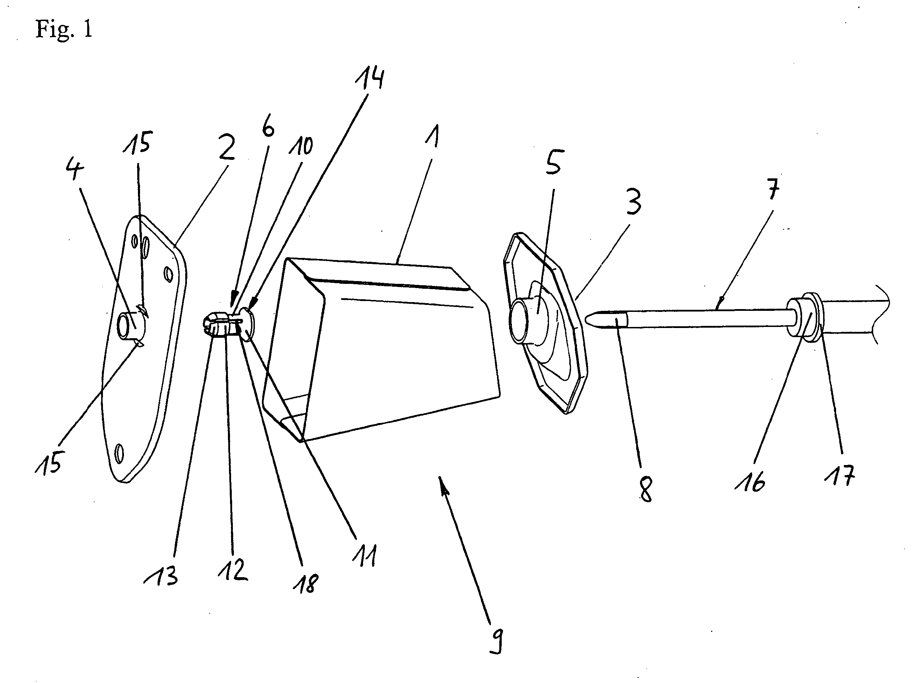

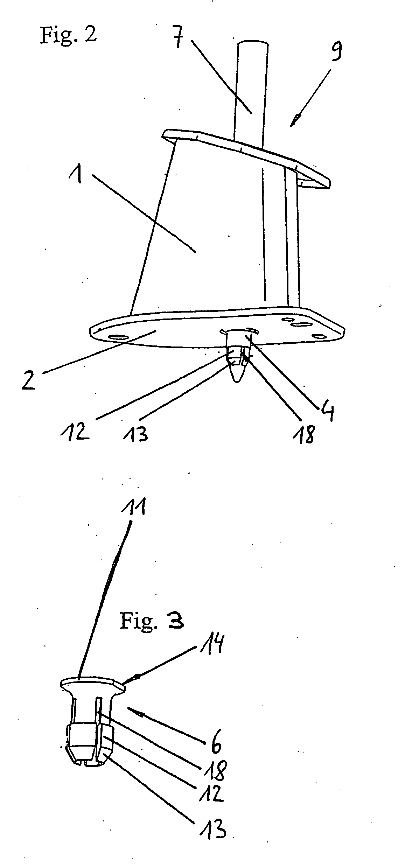

Im Ausführungsbeispiel (Figur 1 und Figur 2) ist der Durchzug 4 der ersten Platte 2 von der Platte 2 auf der dem rohrartigen Mittelteil 1 abgewandten Seite abragend angeordnet. Alternativ und in den Figuren nicht gezeigt können die Durchzüge 4,5 beider Platten 2,3 aufeinander zu gerichtet in das rohrartige Mittelteil 1 hineinragend ausgebildet sein.

Das Gewindeteil 6 kann aus einer Buchse mit Innengewinde, in die der Haltebolzen 7 des Trägersystems einschraubbar ist, bestehen.

Im Ausführungsbeispiel gemäß der Figuren 1 und 2 ist das Gewindeteil 6 durch ein Teil mit einem zylindrischen Bereich 10 mit einem Kragen 11 am ersten Ende und einer außenseitigen Stufe 12 nahe des anderen Endes gebildet. Der Außendurchmesser des zylindrischen Bereichs 10 entspricht dabei dem Innendurchmesser des Durchzuges 4 und die Länge des zylindrischen Bereichs 10 zwischen Kragen 11 und Stufe 12 entspricht der Länge des Durchzuges 4. Hierdurch ist in der Montagesolllage der zylindrische Bereich 10 innerhalb des Durchzuges 4 angeordnet und der Kragen 11 stützt sich am ersten Ende und die Stufe 12 am anderen Ende des Durchzuges 4 ab. Somit ist das eingesetzte Gewindeteil 6 innerhalb des Durchzuges 4 gegen Längsverschiebung gesichert gehaltert. Der zylindrische Bereich 10 und die Stufe 12 sind bis zum der Stufe 12 nahen freien Ende des Gewindeteils 6 längs geschlitzt (bei 18). Das der Stufe 12 nahe freie Ende ist im Durchmesser verjüngt (bei 13) und bildet eine Einführschräge. Hierdurch ist das Einstecken des Gewindeteils 6 in den jeweiligen Durchzug 4 erleichtert.

Der an den zylindrischen Bereich 10 angrenzende Kragen 11 bildet in Einführrichtung in den Durchzug 4 gesehen einen Wegbegrenzungsanschlag. Nach Einführen in den Durchzug 4 liegt der Kragen 11 an der Platte 2 an und verhindert somit ein Verschieben in Einführrichtung über die Solllage hinaus. Ein Verschieben entgegen der Einführrichtung ist durch die Stufe 12, die in der Montagesolllage an der vorderen Randkante des jeweiligen Durchzuges 4 anliegt, verhindert. Um ein Verdrehen des Gewindeteiles 6 innerhalb des Durchzuges 4 zu verhindern, weist der an den zylindrischen Bereich 10 angrenzende Kragen 11 Abflachungen auf, die sich in der Montagesolllage an der Platte 2 angeordneten Vorsprüngen 15 abstützen. Hierdurch ist das Gewindeteil 6 unverdrehbar an der Platte 2 den Durchzug 4 durchragend angeordnet.

Bei dem in den Figuren 1 und 2 gezeigten Ausführungsbeispiel ist das Gewindeteil 6 durch den zweiten Durchzug 5 hindurch in den ersten Durchzug 4 eingesteckt (Figur 2) beziehungsweise einsteckbar (Figur 1). Dabei ist der Innendurchmesser des zweiten Durchzugs 5 größer als der durch den Kragen 11 des Gewindeteils 6 gebildete Außendurchmesser des Gewindeteils 6. Nahe des freien Endes des Haltebolzens 7 des Trägersystems ist in Einsteckrichtung ein Gewinde 8 zur Verschraubung mit dem am zylindrischen Teil 10 ausgebildeten Innengewinde des Gewindeteils 6 vorgesehen. Dabei ist an dem Haltebolzen 7 mit Abstand zum freien Ende eine Führung 16 mit einem zweiten Kragen 17 vorgesehen, mittels derer der Haltebolzen 7 in der Montagesolllage innerhalb des zweiten Durchzuges 5 geführt ist. Der zweite Kragen 17 bildet dabei einen Wegbegrenzungsanschlag in Einführrichtung für den Haltebolzen 7. Hierdurch ist ein Einschrauben bis zu einer genau definierten Position ermöglicht.

In einem alternativen Ausführungsbeispiel, welches in den Figuren nicht gezeigt ist, ist das Gewindeteil 6 in den zweiten Durchzug eingesteckt und zur Verschraubung mit dem Gewindeteil 6 am Haltebolzen 7 ein vom freien Ende des Haltebolzens 7 beabstandetes Gewinde ausgebildet. Der Haltebolzen 7 ist dabei nahe dem freien Ende des Haltebolzens 7 in der Montagesolllage innerhalb des zweiten Durchzuges 5 geführt.

Um ein Einschrauben des Haltebolzens 7 in das Gewindeteil 6 zu vereinfachen ist das freie Ende des Haltebolzens 7 spitz auslaufend ausgebildet.

Die Erfindung ist nicht auf das Ausführungsbeispiel beschränkt, sondern im Rahmen der Offenbarung vielfach variabel.

## Patentansprüche

1. Fahrzeug mit mindestens einem Längsträger und einem rückwärtigen Stoßfänger und mit einer Vorrichtung zur Befestigung eines Trägersystems am rückwärtigen Stoßfänger, das aus einem zwischen einem Längsträger und dem Stoßfänger angeordneten Bauteil besteht, welches eine am Längsträger befestigte, befestigbare oder am Längsträger ausgebildete erste Platte (2) und eine am Stoßfänger befestigte oder befestigbare oder am Stoßfänger ausgebildete zweite Platte (3) aufweist, wobei die erste Platte (2) und die zweite Platte (3) jeweils einen angeformten Durchzug (4,5) oder eine Lochung mit Aufstellungen, die eine durchzugartige Halteeinrichtung bilden, aufweist, wobei die Durchzüge (4,5) oder die Lochungen mit den Aufstellungen der ersten Platte (2) und der zweiten Platte (3) zueinander koaxial ausgerichtet sind, und das Trägersystem einen Haltebolzen (7) aufweist, der entweder den Durchzug (5) oder die Lochung mit Aufstellungen der zweiten Platte (3) durchgreift und in den Durchzug (4) oder die Lochung mit Aufstellungen der ersten Platte (2) eingreift, wobei der Haltebolzen (7) in den Durchzug (5) oder der Lochung mit Aufstellungen der zweiten Platte (3) geführt ist und mit einem am Haltebolzen (7) ausgebildeten Gewinde (8) mit dem an der ersten Platte (2) befindlichen Gewindeteil (6) verschraubt ist, oder der Haltebolzen (7) den Durchzug (4) oder die Lochung mit Aufstellungen der ersten Platte (2) durchgreift und in den Durchzug (5) oder die Lochung mit Aufstellungen der zweiten Platte (3) eingreift, wobei der Haltebolzen (7) in dem Durchzug (4) oder der Lochung mit Aufstellungen der ersten Platte (2) geführt ist und mit einem am Haltebolzen (7) ausgebildeten Gewinde mit dem an der zweiten Platte (3) befindlichen Gewindeteil (6) verschraubt ist, **dadurch gekennzeichnet, dass** ein Gewindeteil (6) vorgesehen ist, das alternativ in den Durchzug (4) oder die Lochung mit Aufstellungen der ersten Platte (2) oder in den Durchzug (5) oder die Lochung mit Aufstellungen der zweiten Platte (3) einsteckbar ist und an der ersten Platte (2) oder deren Durchzug (4) oder deren Lochung befestigbar ist oder an der zweiten Platte (3) oder deren Durchzug (5) oder deren Lochung befestigbar ist und dass das Gewindeteil (6) durch ein Teil mit einem zylindrischen Bereich (10) mit einem Kragen (11) am ersten Ende und einer außenseitigen Stufe (12) nahe des anderen Endes gebildet ist, wobei der Außendurchmesser des zylindrischen Bereichs (10) dem Innendurchmesser des Durchzuges (4) oder des Durchzuges (5) und die Länge des zylindrischen Bereichs (10) zwischen Kragen (11) und Stufe (12) der Länge des Durchzuges (4) oder des Durchzuges (5) entspricht, so dass in der Montagesolllage der zylindrische Bereich (10) innerhalb des Durchzuges (4) oder des Durchzuges (5) angeordnet ist und sich der Kragen (11) am ersten Ende und die Stufe (12) am anderen Ende des Durchzuges (4) oder des Durchzuges (5) abstützt.

2. Fahrzeug nach Anspruch 1, **dadurch gekennzeichnet, dass** das Bauteil durch eine Crashbox (9) mit einem rohrartigen Mittelteil (1) und mit einer Kopf- und einer Fußplatte gebildet ist, wobei die erste Platte (2) die Fußplatte bildet und am Träger angeordnet ist und die zweite Platte (3) die Kopfplatte bildet und am Stoßfänger des Fahrzeugs angeordnet ist, wobei ferner an der Fußplatte der erste Durchzug (4) oder die erste Lochung und an der Kopfplatte der zweite Durchzug (5) oder die zweite Lochung ausgebildet ist.

3. Fahrzeug nach Anspruch 1 oder 2,
**dadurch gekennzeichnet, dass** das Gewindeteil (6) an der Platte (2 oder 3) formschlüssig befestigbar oder verrastbar ist und in Solllage unverdrehbar und unverschieblich fixiert ist.

4. Fahrzeug nach einem der Ansprüche 2 oder 3,
**dadurch gekennzeichnet, dass** der Durchzug (4) der ersten Platte (2) von der ersten Platte (2) auf der dem rohrartigen Mittelteil (1) abgewandten Seite abragt.

5. Fahrzeug nach einem der Ansprüche 2 bis 4,
**dadurch gekennzeichnet, dass** die Durchzüge (4,5) der ersten und der zweiten Platte (2,3) aufeinander zugerichtet in das rohrartige Mittelteil (1) hineinragend ausgebildet sind.

6. Fahrzeug nach einem der Ansprüche 1 bis 5,
**dadurch gekennzeichnet, dass** das Gewindeteil (6) durch eine Buchse mit Innengewinde gebildet ist, in die der Haltebolzen (7) des Trägersystems einschraubbar ist.

7. Fahrzeug nach Anspruch 1, **dadurch gekennzeichnet, dass** der zylindrische Bereich (10) und die Stufe (12) bis zum der Stufe (12) nahen freien Ende des Gewindeteils (6) längs geschlitzt (bei 18) sind.

8. Fahrzeug nach Anspruch 1 oder 7,
**dadurch gekennzeichnet, dass** der Stufe (12) nahe freie Ende eine Einführschräge bildend im Durchmesser verjüngt (bei 13) ist.

9. Fahrzeug nach Anspruch 1 oder 7 bis 9,
**dadurch gekennzeichnet, dass** der an den zylindrischen Bereich (10) angrenzende Kragen (11) in Einführrichtung einen Wegbegrenzungsanschlag bildet.

10. Fahrzeug nach einem der Ansprüche 1 oder 7 bis 9,
**dadurch gekennzeichnet, dass** der an den zylindrischen Bereich (10) angrenzende Kragen (11) Abflachungen (14) aufweist, die sich in der Montagesolllage an an der ersten Platte (2) oder an der zweiten Platte (3) angeordneten Vorsprüngen (15) abstützen, so dass das Gewindeteil (6) unverdrehbar an der ersten Platte (2) oder der zweiten Platte (3) den Durchzug (4) oder den Durchzug (5) durchragend angeordnet ist.

11. Fahrzeug nach einem der Ansprüche 1 oder 7 bis 10,
**dadurch gekennzeichnet**, das zylindrische Teil (10) mit Kragen (11) durch den Durchzug (5) der zweiten Platte (3) hindurch in den Durchzug (4) der ersten Platte (2) hinein eingesteckt oder einsteckbar ist, wobei der Innendurchmesser des Durchzugs (5) der zweiten Platte (3) größer ist als der Außendurchmesser des zylindrischen Teils (10) samt Kragen (11), dass am oder nahe des freien Endes des Haltebolzens (7) ein Gewinde (8) zur Verschraubung mit dem zylindrischen Teil (10) vorgesehen ist, wobei an dem Haltebolzen (7) mit Abstand zum freien Ende eine Führung (16) mit einem zweiten Kragen (17) vorgesehen ist, mittels derer der Haltebolzen (7) in der Montagesolllage innerhalb des Durchzuges (5) der zweiten Platte (3) geführt ist.

12. Fahrzeug nach einem der Ansprüche 7 bis 11,
**dadurch gekennzeichnet, dass** der zweite Kragen (17) einen Wegbegrenzungsanschlag in Einführrichtung bildet.

13. Fahrzeug nach einem der Ansprüche 1 bis 12,
**dadurch gekennzeichnet, dass** das Gewindeteil (6) in den Durchzug (5) der zweiten Platte (3) eingesteckt oder einsteckbar ist, wobei zur Verschraubung mit dem Gewindeteil (6) am Haltebolzen (7) ein vom freien Ende des Haltebolzens (7) beabstandetes Gewinde ausgebildet ist, und der Haltebolzen (7) an oder nahe dem freien Ende des Haltebolzens (7) in der Montagesolllage innerhalb des Durchzuges (4) der ersten Platte (2) geführt ist.

14. Fahrzeug nach einem der Ansprüche 1 bis 13,
**dadurch gekennzeichnet, dass** das freie Ende des Haltebolzens (7) spitz ausläuft.

## Claims

1. A vehicle comprising at least one longitudinal chassis beam and a rear bumper and comprising a device for fixing a carrier system at the rear bumper, said carrier system consisting of a component arranged between one longitudinal chassis beam and the bumper, said component comprising a first plate (2) that is fixed or can be fixed at the longitudinal chassis beam or is formed at the longitudinal chassis beam, and a second plate (3) that is fixed or can be fixed at the bumper or is formed at the bumper, the first plate (2) and the second plate (3) each comprising an integrally formed rim hole (4, 5) or punched holes with alignments forming a rim hole-type retaining device, the rim holes (4, 5) or punched holes with alignments of the first plate (2) and of the second plate (3) being arranged coaxially to each other, and the carrier system comprising a retaining bolt (7) that either passes through the rim hole (5) or the punched holes with alignments of the second plate (3) and engages in the rim hole (4) or the punched holes with alignments of the first plate (2), the retaining bolt (7) being guided in the rim hole (5) or the punched holes with alignments of the second plate (3) and being connected by screwing a thread (8) formed at the retaining bolt (7) into the threaded portion (6) provided at the first plate (2), or the retaining bolt (7) passing through the rim hole (4) or the punched holes with alignments of the first plate (2) and engaging in the rim hole (5) or the punched holes with alignments of the second plate (3), the retaining bolt (7) being guided into the rim hole (4) or the punched holes with alignments of the first plate (2) and being connected by screwing a thread formed at the retaining bolt (7) into the threaded portion (6) provided at the second plate (3), **characterized by** that a threaded portion (6) is provided that can be inserted alternatively into the rim hole (4) or the punched holes with alignments of the first plate (2) or in the rim hole (5) or the punched holes with alignments of the second plate (3) and can be fixed at the first plate (2) or rim hole (4) thereof or the punched holes thereof or can be fixed at the second plate (3) or the rim hole (5) thereof or the punched holes thereof, and that the threaded portion (6) is formed by a portion with a cylindrical section (10) with a collar (11) at the first end and an external step (12) close to the other end, the external diameter of the cylindrical section (10) corresponding to the internal diameter of the rim hole (4) or of the rim hole (5) and the length of the cylindrical section (10) between collar (11) and step (12) corresponding to the length of the rim hole (4) or of the rim hole (5), so that in the desired installation position, the cylindrical section (10) is arranged inside the rim hole (4) or the rim hole (5) and the collar (11) is supported at the first end and the step (12) is supported at the other end of the rim hole (4) or the rim hole (5).

2. The vehicle according to claim 1, **characterized by** that the component is formed by a crash box (9) with a tubular central part (1) and with a head plate and a foot plate, the first plate (2) forming the foot plate and being arranged at the chassis beam, and the second plate (3) forming the head plate and being arranged at the bumper, further the first rim hole (4) or the first punched holes being formed at the foot plate and the second rim hole (5) or the second punched holes being formed an the head plate.

3. The vehicle according to claim 1 or 2, **characterized by** that the threaded portion (6) can be fixed, in particular latched, in a positive-locking manner at the plate (2 or 3) and preferably is fixed in the desired position in a non-rotatable and non-displaceable manner.

4. The vehicle according to one of claims 2 or 3, **characterized by** that the rim hole (4) of the first plate (2) protrudes from the first plate (2) on the side opposite to the tubular central part (1).

5. The vehicle according to one of claims 2 to 4, **characterized by** that the rim holes (4, 5) of the first and second plates (2, 3) are directed toward each other and project into the tubular central part (1).

6. The vehicle according to one of claims 1 to 5, **characterized by** that the threaded portion (6) is formed by a bush with an internal thread, into which the retaining bolt (7) of the carrier system can be screwed.

7. The vehicle according to claim 1, **characterized by** that the cylindrical section (10) and the step (12) are longitudinally slotted (at 18) up to the free end of the threaded portion (6) close to the step (12).

8. The vehicle according to claim 1 or 7, **characterized by** that the free end close to the step (12) has a tapered diameter (at 13) and forms an insertion slope.

9. The vehicle according to one of claims 1 or 7 to 9, **characterized by** that the collar (11) adjacent to the cylindrical section (10) forms a travel limit stop in the direction of insertion.

10. The vehicle according to one of claims 1 or 7 to 9, **characterized by** that the collar (11) adjacent to the cylindrical section (10) comprises flattened portions (14), which in the desired installation position are supported at projections (15) arranged at the first plate (2) or the second plate (3), so that the threaded portion (6) is arranged in a non-rotatable manner at the first plate (2) or the second plate (3) and passes through the rim hole (4) or the rim hole (5).

11. The vehicle according to one of claims 1 or 7 to 10, **characterized by** that the cylindrical portion (10) with the collar (11) is inserted or can be inserted through the rim hole (5) of the second plate (3) into the rim hole (4) of the first plate (2), the internal diameter of the rim hole (5) of the second plate (3) being larger than the external diameter of the cylindrical portion (10) together with the collar (11), that at or close to the free end of the retaining bolt (7), a thread (8) for a screw connection with the cylindrical portion (10) is provided, a guide (16) with a second collar (17) being provided at the retaining bolt (7) spaced to the free end, by means of said guide the retaining bolt (7) being guided in the desired installation position within the rim hole (5) of the second plate (3).

12. The vehicle according to one of claims 7 to 11, **characterized by** that the second collar (17) forms a travel limit stop in the direction of insertion.

13. The vehicle according to one of claims 1 to 12, **characterized by** that the threaded portion (6) is inserted or can be inserted into the rim hole (5) of the second plate (3), a thread spaced to the free end of the retaining bolt (7) being formed at the retaining bolt (7) for a screw connection with the threaded portion (6), and that, in the desired installation position, the retaining bolt (7) is guided at or close to the free end of the retaining bolt (7) within the rim hole (4) of the first plate (2).

14. The vehicle according to one of claims 1 to 13, **characterized by** that the free end of the bolt (7) tapers to a point.

## Revendications

1. Véhicule comprenant au moins un longeron et un pare-chocs arrière et comprenant un dispositif de fixation d'un système porteur au pare-chocs arrière, ledit système porteur consistant en un composant arrangé entre le longeron et le pare-chocs, ledit composant comprenant une première plaque (2) qui est fixée ou peut être fixée au longeron ou est formée au longeron, et une deuxième plaque (3) qui est fixée ou peut être fixée au pare-chocs ou est formée au pare-chocs, la première plaque (2) et la deuxième plaque (3) chacune comprenant une traverse (4, 5) formée d'une seule pièce ou une perforation avec des alignements formant un dispositif de retenue de type traverse, les traverses (4, 5) ou la perforation avec des alignements de la première plaque (2) et de la deuxième plaque (3) étant arrangées coaxialement l'une par rapport à l'autre, et le système porteur comprenant un boulon de fixation (7) qui passe par la traverse (5) ou bien la perforation avec des alignements de la deuxième plaque (3) et s'engage dans la traverse (4) ou la perforation avec des alignements de la première plaque (2), le boulon de fixation (7) étant guidé dans la traverse (5) ou la perforation avec des alignements de la deuxième plaque (3) et étant assemblé par vissage par un filetage (8) formé au boulon de fixation (7) avec la partie filetée (6) prévue à la première plaque (2), ou le boulon de fixation (7) passant à travers la traverse (4) ou la perforation avec des alignements de la première plaque (2) et s'engageant dans la traverse (5) ou la perforation avec des alignements de la deuxième plaque (3), le boulon de fixation (7) étant guidé dans la traverse (4) ou la perforation avec des alignements de la première plaque (2) et étant assemblé par vissage par un filetage formé au boulon de fixation (7) avec la partie filetée (6) prévue à la deuxième plaque (3), **caractérisé en ce qu'**une partie filetée (6) est prévue qui peut être insérée alternativement dans la traverse (4) ou la perforation avec des alignements de la première plaque (2) ou dans la traverse (5) ou la perforation avec des alignements de la deuxième plaque (3) et peut être fixée à la première plaque (2) ou la traverse (4) de celle-ci ou la perforation de celle-ci ou peut être fixée à la deuxième plaque (3) ou la traverse (5) de celle-ci ou la perforation de celle-ci, et que la partie filetée (6) est formée par une partie avec une partie cylindrique (10) avec un collet (11) à la première extrémité et un épaulement extérieur (12) proche de l'autre extrémité, le diamètre extérieur de la partie cylindrique (10) correspondant au diamètre de la traverse (4) ou de la traverse (5) et la longueur de la partie cylindrique (10) entre collet (11) et épaulement (12) correspondant à la longueur de la traverse (4) ou de la traverse (5), de façon que dans la position de consigne de montage, la partie cylindrique (10) est arrangée à l'intérieur de la traverse (4) ou la traverse (5) et le collet (11) s'appuie à la première extrémité et l'épaulement (12) s'appuie à l'autre extrémité de la traverse (4) ou la traverse (5).

2. Véhicule selon la revendication 1, **caractérisé en ce que** le composant est formé par un crashbox (9) avec un partie centrale tubulaire (1) et avec une plaque de tête et une plaque de pied, la première plaque (2) formant la plaque de pied et étant arrangée au longeron, et la deuxième plaque (3) formant la plaque de tête et étant arrangée au pare-chocs, en outre la première traverse (4) ou la première perforation étant formée à la plaque de pied et la deuxième traverse (5) ou la deuxième perforation étant formée à la plaque de tête.

3. Véhicule selon la revendication 1 ou 2, **caractérisé en ce que** la partie filetée (6) peut être fixée, en particulier enclenchée, par complémentarité de forme, à la plaque (2 ou 3) et de préférence est fixée dans la position de consigne d'une manière solidaire en rotation et indéplaçable.

4. Véhicule selon une des revendications 2 ou 3, **caractérisé en ce que** la traverse (4) de la première plaque (2) fait saillie de la première plaque (2) sur le côté opposé à la partie centrale tubulaire (1).

5. Véhicule selon une des revendications 2 à 4, **caractérisé en ce que** les traverses (4, 5) de la première et la deuxième plaque (2, 3) sont orientées l'une vers l'autre et dépassent dans la partie centrale tubulaire (1).

6. Véhicule selon une des revendications 1 à 5, **caractérisé en ce que** la partie filetée (6) est formée par une douille à filetage intérieur, dans laquelle le boulon de fixation (7) du système porteur peut être vissé.

7. Véhicule selon la revendication 1, **caractérisé en ce que** la partie cylindrique (10) et l'épaulement (12) sont fendus en longueur (à 18) jusqu'à l'extrémité libre de la partie filetée (6) proche de l'épaulement (12).

8. Véhicule selon la revendication 1 ou 7, **caractérisé en ce que** l'extrémité libre proche de l'épaulement (12) a un diamètre diminuant (à 13) et forme un chanfrein d'introduction.

9. Véhicule selon une des revendications 1 ou 7 à 9, **caractérisé en ce que** le collet (11) adjacent à la partie cylindrique (10) forme un arrêt de limite de course dans la direction d'insertion.

10. Véhicule selon une des revendications 1 ou 7 à 10, **caractérisé en ce que** le collet (11) adjacent à la partie cylindrique (10) comprend des méplats (14), qui dans la position de consigne de montage s'appuient à des saillies (15) arrangées à la première plaque (2) ou la deuxième plaque (3), de façon que la partie filetée (6) soit arrangée d'une manière solidaire en rotation à la première plaque (2) ou la deuxième plaque (3) et passe par la traverse (4) ou la traverse (5).

11. Véhicule selon une des revendications 1 ou 7 à 10, **caractérisé en ce que** la partie cylindrique (10) avec le collet (11) est insérée ou peut être insérée à travers la traverse (5) de la deuxième plaque (3) dans la traverse (4) de la première plaque (2), le diamètre intérieur de la traverse (5) de la deuxième plaque (3) étant supérieur au diamètre extérieur de la partie cylindrique (10) ensemble avec le collet (11), qu'à ou proche de l'extrémité libre du boulon de fixation (7), un filetage (8) pour un liage vissé avec la partie cylindrique (10) est prévu, un dispositif de guidage (16) avec un deuxième collet (17) étant prévu au boulon de fixation (7) à distance de l'extrémité libre, au moyen dudit dispositif de guidage le boulon de fixation (7) étant guidé dans la position de consigne de montage au-dedans de la traverse (5) de la deuxième plaque (3).

12. Véhicule selon une des revendications 7 à 11, **caractérisé en ce que** le deuxième collet (17) forme un arrêt de limite de course dans la direction d'insertion.

13. Véhicule selon une des revendications 1 à 12, **caractérisé en ce que** la partie filetée (6) est insérée ou peut être insérée dans la traverse (5) de la deuxième plaque (3), un filetage à distance de l'extrémité libre du boulon de fixation (7) étant formé au boulon de fixation (7) pour un liage vissé avec la partie filetée (6), et que, dans la position de consigne de montage, le boulon de fixation (7) est guidé à ou proche de l'extrémité libre du boulon de fixation (7) au-dedans de la traverse (4) de la première plaque (2).

14. Véhicule selon une des revendications 1 à 13, **caractérisé en ce que** l'extrémité libre du boulon (7) se termine en une pointe.
